# EUROPEAN PATENT SPECIFICATION

(11) **EP 3 995 388 B1**
(45) Date of publication and mention of the grant of the patent: **14.02.2024**
(21) Application number: 21202646.2
(22) Date of filing: 14.10.2021
(51) Int. Cl.: B62M 9/16

(54) **BICYCLE WITH A CHAIN OR BELT TENSIONER**
FAHRRAD MIT EINEM KETTEN- ODER RIEMENSPANNER
BICYCLETTE DOTÉE D'UN TENDEUR DE CHAÎNE OU DE COURROIE

(30) Priority: 06.11.2020 NL 2026848
(43) Date of publication of application: 11.05.2022
(73) Proprietor: Hesling B.V., 7071 CK Ulft (NL)
(72) Inventor: KRUISSELBRINK, Eric, ULFT (NL)
(74) Representative: van Breda, Jacobus

(56) References cited:
- WO-A1-2008/108641
- WO-A1-2015/080570
- CN-A- 111 516 787
- DE-A1- 19 840 576
- DE-B- 1 029 248
- NL-C1- 1 031 405
- US-A1- 2020 047 837

## Description

The invention relates to a bicycle with a drivetrain comprising one of a chain and a belt, the bicycle further comprising a chain or belt guard, wherein the chain or belt is guided within the chain or belt guard, said bicycle further comprising a tensioner for maintaining tension in the chain or belt.

US2012/0322594 and US2010/0113200 each discloses a bicycle with a chain and a tensioner of the derailleur-type for maintaining tension in the chain.

US 4,069,719 and US2014/0357436 each disclose a bicycle with a chain and a tensioner for maintaining tension in the chain, wherein the tensioner is mounted on the frame of the bicycle.

Usually the known bicycle with a drivetrain comprising one of a chain and a belt, further comprises a chain or belt guard, wherein the chain or belt is guided within the chain or belt guard. When the bicycle must exhibit an attractive appearance it is required that a relatively slim chain or belt guard is applied. However there is then little or no room left for the application of a tensioner for the chain or belt, unless one compromises the outer appearance of the belt or chain guard to a bulky and unattractive design. However, particularly in that situation that a chain or belt guard is applied, there is a need for a chain or belt tensioner which automatically maintains the chain or belt at a desired tension, thus avoiding the need to regularly having to dismantle or dismount the chain or belt guard for the purpose of getting access to the chain or belt for their tensioning. This need has even further increased since the introduction of e-bikes. Particularly with e-bikes regular tensioning of the chain or belt is required more often.

NL 1 031 405 and WO2015/080570 each disclose a tensioner for a belt or chain of a bicycle, wherein the tensioner is mounted within and on an inner wall of the chain or belt guard.

WO 2008/108641 discloses a bicycle according to the preamble of claim 1, wherein the tensioner comprises two arms that are swivably connected to each other with a hinge, wherein the tensioner comprises further three guide wheels for the chain or belt, a first guide wheel mounted on the hinge connecting the two arms, and the two other guide wheels mounted on distant positions with respect to each other and with respect to the first guide wheel on the respective swivable arms. In this construction the frame can remain unchanged, whereas a further advantage is that there is less risk that the chain or belt will derail. Another major advantage is that the application of the tensioner is independent from the dimensions of the frame of the bicycle. Accordingly one simply can place the tensioner without any requirement to adjust the settings of the tensioner or of the frame. Also replacing the tensioner at a later instance - if this would be required - is an easy task. Another advantage is that the tensioner has no fixed contact with the frame; accordingly the tensioner has little or no influence on the "tracking" of the chain, and no adjustment is required to prevent the chain from being pushed off the sprocket.

It is an object of the invention to answer to the need of automatic tensioning of the chain or belt that is guided in a relatively slim chain or belt guard so as to confer an attractive appearance to the bicycle, wherein further the design of the frame of the bicycle can remain unchanged.

According to the invention a bicycle is proposed provided with the features of one or more of the appended claims.

In accordance with the invention the tensioner has no fixed contact with the chain or belt guard, but a flexible connection with the chain or belt guard to keep the tensioner in place; this results in minimal contact noise.

With the measure of mounting the tensioner in accordance with the invention within and on an inner wall of the chain or belt guard, the invention departs from the conventional wisdom that the tensioner should at least be stably positioned on the frame of the bicycle. Nevertheless it has proven to be possible to continuously tension the chain or belt, whilst dismantling or dismounting of the chain or belt guard is unnecessary since the tensioning of the chain or belt follows automatically with the tensioner mounted according to the invention on the inner wall of the chain or belt guard. The only requirement that has to be met by the mounting on the inner wall of the chain or belt guard is that the tensioner is prevented from freely floating within the chain guard or belt guard. For this reason it suffices to provide the tensioner through a flexible connection linked to the inner wall of the chain or belt guard.

It is preferred that the two arms are spring-loaded with a spring mounted at or near the hinge urging the first guide wheel and the two other guide wheels in opposite directions.

One thing and another can preferably be embodied such that the chain or belt is guided over the first guide wheel and through respective open spaces between the first guide wheel the one hand and the two other guide wheels on the other hand.

In the above it is already mentioned that preferably the tensioner has no fixed contact, but a flexible connection with the chain or belt guard to keep the tensioner in place. This is preferably embodied such that each of the two arms is provided with a flexible suspension portion which is attached or attachable to the inner wall of the chain or belt guard, so as to arrange that the two arms remain swivable whilst being connected to the inner wall of the chain or belt guard.

Suitably the flexible suspension portion of each arm comprises a resilient branch that connects the concerning arm to the inner wall of the chain or belt guard.

The invention will hereinafter be further elucidated with reference to the drawing of exemplary embodiments of a bicycle according to the invention that is not limiting as to the appended claims.

In the drawing:
- figure 1 shows a detail of a first embodiment of a bicycle according to the invention in a side view;
- figure 2 shows a detail of a second embodiment of a bicycle according to the invention in a side view; and
- figures 3A - 3C show different views at the tensioner as applicable in the first and second embodiment of the bicycle shown in figures 1 and 2.

Whenever in the figures the same reference numerals are applied, these numerals refer to the same parts.

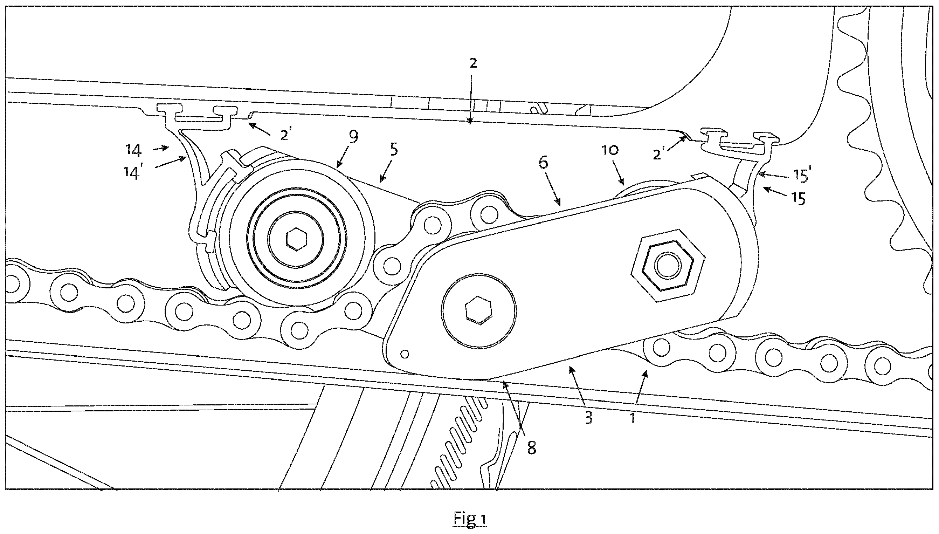

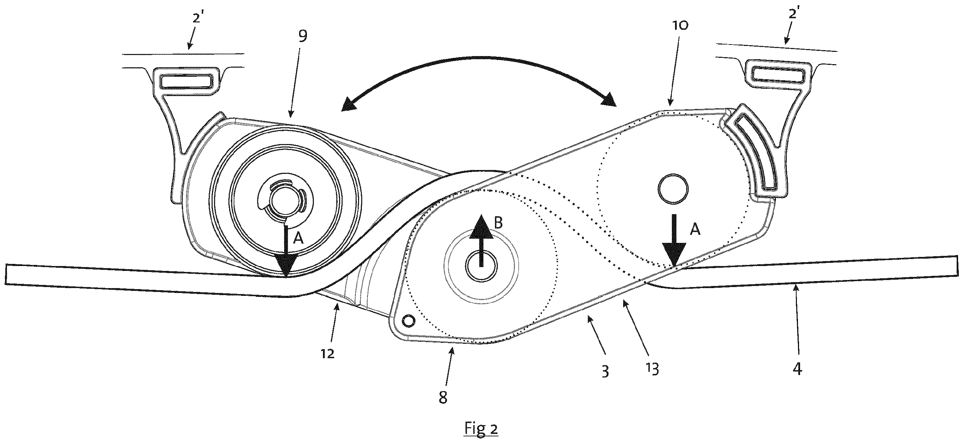

Both figure 1 and figure 2 show a detail of the bicycle of the invention. It requires no elucidation -not even for the layman- that a bicycle comprises a frame with a saddle, a back wheel mounted in the frame, and a front wheel mounted in the frame, wherein the frame also provides for a steering handle with which the angular position of the front wheel can be manipulated so as to enable a cyclist to determine in which direction the bicycle will take him or her. Because of its superfluousness and immediate evidence to the skilled person of what makes a bicycle a bicycle, the figures concentrate on a particular detail of the bicycle which relates to the invention.

In figure 1 a first embodiment of the bicycle of the invention is shown wherein the bicycle has a chain 1, as well as a chain guard 2, wherein the chain 1 is guided within the chain guard 2. Further the bicycle comprises a tensioner 3 for maintaining tension in the chain 1.

Figure 2 shows a second embodiment of the bicycle of the invention, wherein the bicycle has a belt 4. The belt guard is not shown but is positioned similarly as is shown in figure 1, wherein the belt 4 is then guided within the belt guard. Figure 2 does show that the bicycle comprises also a tensioner 3 for maintaining tension in the belt 4.

In both embodiments of figure 1 and figure 2, the tensioner 3 is mounted on the chain guard 2 (see figure 1), and on the belt guard (not shown in figure 2).

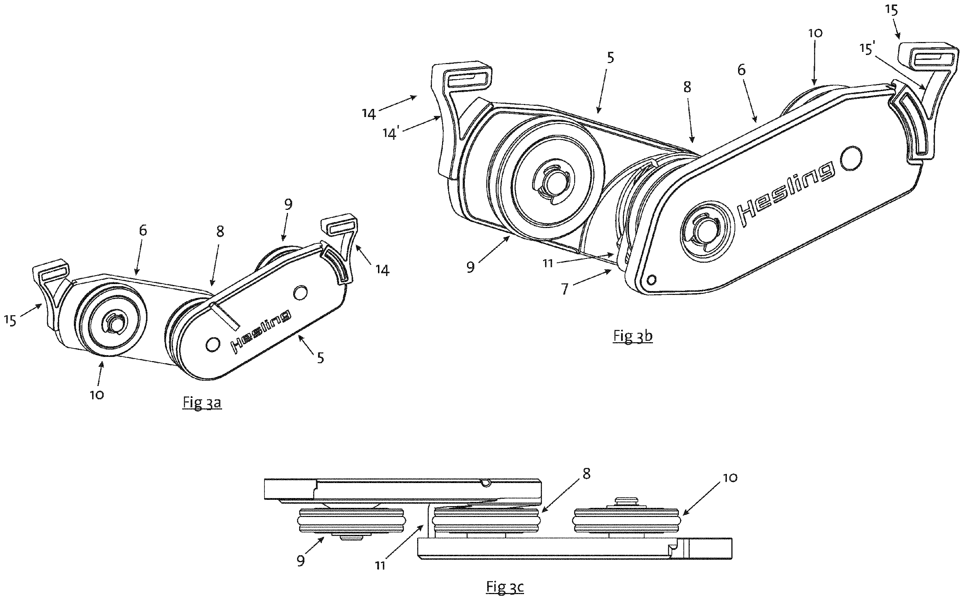

With further reference also to figures 3A - 3C the tensioner 3 is shown to comprise two arms 5, 6 that are swivably connected to each other with a hinge 7, wherein the tensioner 3 comprises further three guide wheels 8, 9, 10 for the chain 1 or belt 4, a first guide wheel 8 mounted on the hinge 7 connecting the two arms 5, 6, and the two other guide wheels 9, 10 mounted on distant positions with respect to each other and with respect to the first guide wheel 8 on the respective swivable arms 5, 6.

The two arms 5, 6 are spring-loaded with a spring 11 mounted at or near the hinge 7 urging the first guide wheel 8 and the two other guide wheels 9, 10 in opposite directions. This is symbolized in figure 2 with the down pointing arrows A at the outer wheels 9, 10 and the up pointing arrow B at the center wheel 8. Particularly this figure 2, but also figure 1, shows that the chain 1 or belt 4 is guided over the first guide wheel 8 and through respective open spaces 12, 13 between the first guide wheel 8 on the one hand and the two other guide wheels 9, 10 on the other hand.

It is preferred that the tensioner 3 has a flexible connection with the chain or belt guard 2 to keep the tensioner 3 in place. As may be best seen in figure 1, for this purpose each of the two arms 5, 6 is provided with a flexible suspension portion 14, 15 which is attached to the inner wall 2' of the chain guard 2 or belt guard, so as to arrange that the two arms 5, 6 remain swivable whilst being connected to the inner wall 2' of the chain guard 2 or belt guard. Preferably the flexible suspension portion 14, 15 of each arm 5, 6 comprises a resilient branch 14', 15' that connects the concerning arm 5, 6 to the inner wall 2' of the chain guard 2 or belt guard.

Although the invention has been discussed in the foregoing with reference to exemplary embodiments of the bicycle of the invention, the invention is not restricted to these particular embodiments which can be varied in many ways without departing from the invention. The scope of protection of the invention shall therefore be construed as defined in the appended claims.

## Claims

1. A bicycle with a drivetrain comprising one of a chain (1) and a belt (4), the bicycle further comprising a chain guard (2) or belt guard, wherein the chain (1) or belt (4) is guided within the chain guard (2) or belt guard, said bicycle further comprising a tensioner (3) for maintaining tension in the chain (1) or belt (4), wherein the tensioner (3) is mounted within and on an inner wall (2') of the chain guard (2) or belt guard, which tensioner (3) comprises two arms (5, 6) that are swivably connected to each other with a hinge (7), wherein the tensioner (3) comprises further three guide wheels (8, 9, 10) for the chain (1) or belt (4), a first guide wheel (8) mounted on the hinge (7) connecting the two arms (5, 6), and the two other guide wheels (9, 10) mounted on distant positions with respect to each other and with respect to the first guide wheel (8) on the respective swivable arms (5, 6), **characterized in that** the tensioner (3) has a flexible connection with the chain or belt guard (2) to keep the tensioner (3) in place.

2. The bicycle according to claim 1, **characterized in that** the two arms (5, 6) are spring-loaded with a spring (11) mounted at or near the hinge (7) urging the first guide wheel (8) and the two other guide wheels (9, 10) in opposite directions.

3. The bicycle according to any one of claims 1-2, **characterized in that** the chain (1) or belt (4) is guided over the first guide wheel (8) and through respective open spaces (12, 13) between the first guide wheel (8) on the one hand and the two other guide wheels (9, 10) on the other hand.

4. The bicycle according to any one of claims 1-3, **characterized in that** each of the two arms (5, 6) is provided with a flexible suspension portion (14, 15) which is attached or attachable to the inner wall (2') of the chain guard (2) or belt guard, so as to arrange that the two arms (5, 6) remain swivable whilst being connected to the inner wall (2') of the chain guard (2) or belt guard.

5. The bicycle according to claim 4, **characterized in that** the flexible suspension portion (14, 15) of each arm (5, 6) comprises a resilient branch (14', 15') that connects the concerning arm (5, 6) to the inner wall (2') of the chain guard (2) or belt guard.

## Patentansprüche

1. Fahrrad mit einem Antriebsstrang, umfassend eines von einer Kette (1) oder einem Riemen (4), wobei das Fahrrad ferner einen Kettenschutz (2) oder Riemenschutz umfasst, wobei die Kette (1) oder der Riemen (4) innerhalb des Kettenschutzes (2) oder Riemenschutzes geführt wird, wobei das Fahrrad ferner einen Spanner (3) zum Aufrechterhalten der Spannung in der Kette (1) oder dem Riemen (4) umfasst, wobei der Spanner (3) innerhalb und an einer Innenwand (2') des Kettenschutzes (2) oder Riemenschutzes angebracht ist, wobei der Spanner (3) zwei Arme (5, 6) umfasst, die schwenkbar miteinander mit einem Gelenk (7) verbunden sind, wobei der Spanner (3) ferner drei Führungsräder (8, 9, 10) für die Kette (1) oder den Riemen (4) umfasst, wobei ein erstes Führungsrad (8) an dem Gelenk (7), das die beiden Arme (5, 6) verbindet, angebracht ist, und die beiden anderen Führungsräder (9, 10), die an voneinander und an vom ersten Führungsrad (8) distanzierten Positionen an den jeweiligen schwenkbaren Armen (5, 6) angebracht sind, **dadurch gekennzeichnet, dass** der Spanner (3) eine flexible Verbindung mit dem Ketten- oder Riemenschutz (2) aufweist, um den Spanner (3) in Position zu halten.

2. Fahrrad gemäß Anspruch 1, **dadurch gekennzeichnet, dass** die beiden Arme (5, 6) federbelastet sind, wobei eine Feder (11), die am oder in der Nähe des Gelenks (7) angebracht ist, das erste Führungsrad (8) und die beiden anderen Führungsräder (9, 10) in entgegengesetzte Richtungen drückt.

3. Fahrrad gemäß einem der Ansprüche 1-2, **dadurch gekennzeichnet, dass** die Kette (1) oder der Riemen (4) über das erste Führungsrad (8) und durch entsprechende Freiräume (12, 13) zwischen dem ersten Führungsrad (8) einerseits und den beiden anderen Führungsrädern (9, 10) andererseits geführt wird.

4. Fahrrad gemäß einem der Ansprüche 1-3, **dadurch gekennzeichnet, dass** jeder der beiden Arme (5, 6) mit einem flexiblen Aufhängungsabschnitt (14, 15) bereitgestellt ist, der an der Innenwand (2') des Kettenschutzes (2) oder des Riemenschutzes angebracht oder anbringbar ist, so dass die beiden Arme (5, 6) schwenkbar bleiben, während sie mit der Innenwand (2') des Kettenschutzes (2) oder des Riemenschutzes verbunden sind.

5. Fahrrad gemäß Anspruch 4, **dadurch gekennzeichnet, dass** der flexible Aufhängungsabschnitt (14, 15) jedes Arms (5, 6) einen elastischen Zweig (14', 15') umfasst, der den betreffenden Arm (5, 6) mit der Innenwand (2') des Kettenschutzes (2) oder Riemenschutzes verbindet.

## Revendications

1. Bicyclette dotée d'une transmission comprenant l'une d'une chaîne (1) et d'une courroie (4), la bicyclette comprenant en outre un carter de chaîne (2) ou carter de courroie, dans laquelle la chaîne (1) ou courroie (4) est guidée à l'intérieur du carter de chaîne (2) ou carter de courroie, ladite bicyclette comprenant en outre un tendeur (3) destiné à maintenir une tension dans la chaîne (1) ou courroie (4), dans laquelle le tendeur (3) est monté à l'intérieur de et sur une paroi interne (2') du carter de chaîne (2) ou carter de courroie, ledit tendeur (3) comprenant deux bras (5, 6) qui sont raccordés de façon pivotante l'un à l'autre avec une charnière (7), dans laquelle le tendeur (3) comprend en outre trois roues de guidage (8, 9, 10) pour la chaîne (1) ou courroie (4), une première roue de guidage (8) montée sur la charnière (7) raccordant les deux bras (5, 6), et les deux autres roues de guidage (9, 10) montées sur des positions distantes l'une par rapport à l'autre et par rapport à la première roue de guidage (8) sur les bras pivotants respectifs (5, 6), **caractérisée en ce que** le tendeur (3) présente un raccordement flexible au carter de chaîne ou courroie (2) pour maintenir le tendeur (3) en position.

2. Bicyclette selon la revendication 1, **caractérisée en ce que** les deux bras (5, 6) sont chargés par ressort avec un ressort (11) monté au niveau ou à proximité de la charnière (7) poussant la première roue de guidage (8) et les deux autres roues de guidage (9, 10) dans des directions opposées.

3. Bicyclette selon l'une quelconque des revendications 1-2, **caractérisée en ce que** la chaîne (1) ou courroie (4) est guidée sur la première roue de guidage (8) et par le biais d'espaces ouverts respectifs (12, 13) entre la première roue de guidage (8) d'un côté et les deux autres roues de guidage (9, 10) de l'autre côté.

4. Bicyclette selon l'une quelconque des revendications 1-3, **caractérisée en ce que** chacun des deux bras (5, 6) est doté d'une partie de suspension flexible (14, 15) qui est fixée ou peut être fixée à la paroi interne (2') du carter de chaîne (2) ou carter de courroie, de manière à faire en sorte que les deux bras (5, 6) restent pivotants tout en étant raccordés à la paroi interne (2') du carter de chaîne (2) ou carter de courroie.

5. Bicyclette selon la revendication 4, **caractérisée en ce que** la partie de suspension flexible (14, 15) de chaque bras (5, 6) comprend une branche résiliente (14', 15') qui raccorde le bras concerné (5, 6) à la paroi interne (2') du carter de chaîne (2) ou carter de courroie.
